# EUROPEAN PATENT APPLICATION

(11) **EP 4 842 099 A1**
(43) Date of publication of application: **18.11.2026**
(21) Application number: 24916075.5
(22) Date of filing: 12.01.2024
(51) Int. Cl.: H04W 72/044

(54) **BEAM MANAGEMENT METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); ZHANG, Jian, Beijing 100022 (CN); ZHAO, Di, Beijing 100022 (CN); LU, Yiwen, Beijing 100022 (CN)
(74) Representative: Haseltine Lake Kempner LLP
(86) International application number: PCT/CN2024/072013
(87) International publication number: WO 2025/148006

(57) **Abstract**

Embodiments of the present disclosure provide a beam management method and apparatus. The beam management method comprises that a terminal equipment receives configuration information from a network device, the configuration information being used to configure beam management and/or beam reporting; and the terminal equipment initiates beam reporting to the network device.

## Description

### TECHNICAL FIELD

Embodiments of the present disclosure relate to the technical field of communications.

### BACKGROUND

Beam management is introduced in Rel-15, and a network device (e.g., a gNB) may configure a terminal equipment (e.g., a UE) to perform beam sweeping so as to select beams for communication. A terminal equipment may report one or more optimal beams via a physical layer beam report (e.g., an L1 beam report including an L1-RSRP).

A network device may configure a list of Transmission Configuration Indication (TCI) states to a terminal equipment, and the network device may transmit a Media Access Control (MAC) Control Element (CE) to the terminal equipment to activate a subset of TCI states, wherein activated TCI state(s) may be further indicated to the terminal equipment via Downlink Control Information (DCI).

It should be noted that the above introduction to the technical background is just to facilitate a clear and complete description of technical solutions of the present disclosure, and is elaborated to facilitate understanding of those skilled in the art. It cannot be considered that the technical solutions are known by those skilled in the art just because these solutions are elaborated in Background of the present disclosure.

### SUMMARY

Inventors find that current beam management procedures are all controlled by a network device, including configuring a terminal equipment by the network device to perform beam reporting, which will lead to significant uplink overhead and control signaling overhead.

For at least one of the above problems, embodiments of the present disclosure provide a beam management method and apparatus.

According to one aspect of embodiments of the present disclosure, a beam management method is provided, including that:
a terminal equipment receives configuration information from a network device; the configuration information being used to configure beam management and/or beam reporting; and
the terminal equipment initiates beam reporting to the network device.

According to another aspect of embodiments of the present disclosure, a beam management apparatus is provided, including:
a receiving unit configured to receive configuration information from a network device; the configuration information being used to configure beam management and/or beam reporting; and
a transmitting unit configured to initiate beam reporting to the network device.

According to another aspect of embodiments of the present disclosure, a beam management method is provided, including that:
a network device transmits configuration information to a terminal equipment; the configuration information being used to configure beam management and/or beam reporting; and
the network device receives beam reporting initiated by the terminal equipment.

According to another aspect of embodiments of the present disclosure, a beam management apparatus is provided, including:
a transmitting unit configured to transmit configuration information to a terminal equipment; the configuration information being used to configure beam management and/or beam reporting; and
a receiving unit configured to receive beam reporting initiated by the terminal equipment.

According to a further aspect of embodiments of the present disclosure, a communication system is provided, including:
a network device configured to transmit configuration information to a terminal equipment; the configuration information being used to configure beam management and/or beam reporting; and
a terminal equipment configured to initiate beam reporting to the network device.

One of advantageous effects of embodiments of the present disclosure lies in that: considering that a terminal equipment side has more timely information about beam quality, a terminal equipment may initiate beam reporting or a beam management procedure, thereby not only accuracy and reliability of beam management may be ensured or improved, but also signaling overhead may be reduced.

Referring to later descriptions and drawings, specific implementations of the present disclosure are disclosed in detail, indicating modes in which principles of the present disclosure may be adopted. It should be understood that implementations of the present disclosure are not limited in scope thereby. Within scopes of terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that term "include/comprise" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.
FIG. 1 is a schematic diagram of a communication system in embodiments of the present disclosure;
FIG. 2 is a schematic diagram of a beam management method in embodiments of the present disclosure;
FIG. 3 is another schematic diagram of a beam management method in embodiments of the present disclosure;
FIG. 4 is an example diagram of event-triggered beam reporting in embodiments of the present disclosure;
FIG. 5 is another example diagram of event-triggered beam reporting in embodiments of the present disclosure;
FIG. 6 is another example diagram of event-triggered beam reporting in embodiments of the present disclosure;
FIG. 7 is another example diagram of event-triggered beam reporting in embodiments of the present disclosure;
FIG. 8 is another example diagram of event-triggered beam reporting in embodiments of the present disclosure;
FIG. 9 is an example diagram of application time of a candidate beam indicated by a MAC CE in embodiments of the present application;
FIG. 10 is an example diagram of application time of a candidate beam indicated by a MAC CE in embodiments of the present application;
FIG. 11 is another schematic diagram of a beam management method in embodiments of the present disclosure;
FIG. 12 is a schematic diagram of a beam management apparatus in embodiments of the present disclosure;
FIG. 13 is another schematic diagram of a beam management apparatus in embodiments of the present disclosure;
FIG. 14 is a schematic diagram of a terminal equipment in embodiments of the present disclosure;
FIG. 15 is a schematic diagram of a network device in embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations in which principles of the present disclosure may be adopted. It should be understood that the present disclosure is not limited to described implementations, on the contrary, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of relevantly listed terms. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, term "communication network" or "wireless communication network" may refer to a network conforming to any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol of any stage, for example which may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in future.

In embodiments of the present disclosure, term "network device" e.g. refers to a device configured to access a terminal equipment to a communication network in a communication system and provide services for the terminal equipment. A network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., moreover, may further include a Remote Radio Head (RRH), a Remote Radio Unit (RRU), a relay or low power node (such as femeto, pico, etc.). And term "base station" may include some or all functions thereof, and each base station may provide communication coverage to a specific geographic region. Term "cell" may refer to a base station and/or a coverage area thereof, which depends on a context in which this term is used.

In embodiments of the present disclosure, term "User Equipment (UE)" or "Terminal Equipment (TE) or Terminal Device" refers to e.g. a device configured to access a communication network and receive network services via a network device. A terminal equipment may be fixed or mobile, and may also be called a Mobile Station (MS), a terminal, a Subscriber Station (SS), an Access Terminal (AT), a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under scenarios such as Internet of Things (IoT), the terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, term "network side" or "network device side" refers to a side of a network, may be a certain base station, or may include one or more of the above network devices. Term "user side" or "terminal side" or "terminal equipment side" refers to a side of a user or terminal, may be a certain UE, or may include one or more of the above terminal equipments. Unless otherwise specified herein, "device" may refer to a network device, or may refer to a terminal equipment.

Scenarios of embodiments of the present disclosure are described below through examples, however the present disclosure is not limited thereto.

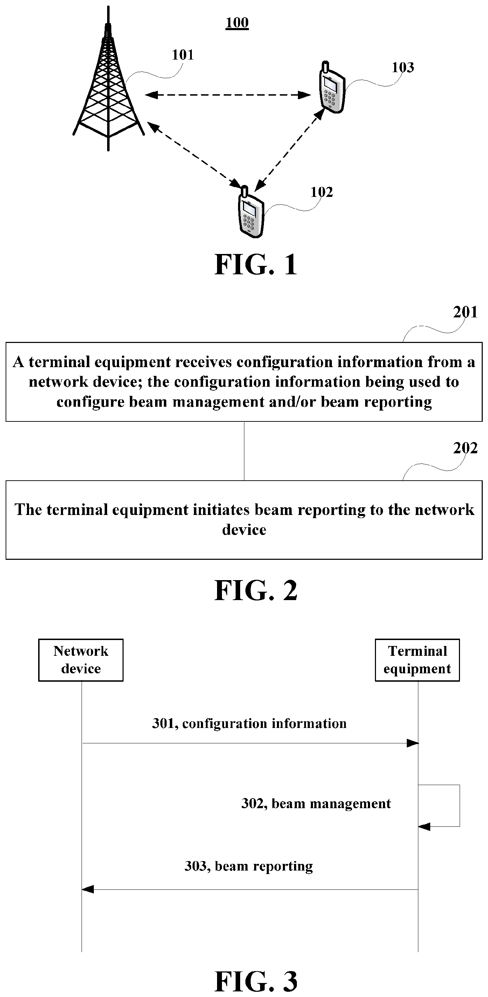

FIG. 1 is a schematic diagram of a communication system in embodiments of the present disclosure, schematically describing a situation by taking a terminal equipment and a network device as an example, and as shown in FIG. 1, a communication system 100 may include a network device 101 and terminal equipments 102, 103. For simplicity, FIG. 1 only takes two terminal equipments and one network device as an example for description, however embodiments of the present disclosure are not limited thereto.

In embodiments of the present disclosure, transmission of existing services or future implementable services may be performed between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are all within a coverage range of the network device 101, however the present disclosure is not limited thereto. Two terminal equipments 102 and 103 may be not within the coverage range of the network device 101, or one terminal equipment 102 is within the coverage range of the network device 101 while the other terminal equipment 103 is outside the coverage range of the network device 101.

In embodiments of the present disclosure, higher layer signaling may be e.g. radio resource control (RRC) signaling; for example, is called an RRC message, e.g. including an MIB, system information, and a dedicated RRC message; or is called an RRC information element (RRC IE). The higher layer signaling may further be e.g. Medium Access Control (MAC) signaling; or is called an MAC control element (MAC CE). However, the present disclosure is not limited thereto.

### Embodiments of a First Aspect

Embodiments of the present disclosure provide a beam management method, which is described from a terminal equipment side.

FIG. 2 is a schematic diagram of a beam management method in embodiments of the present disclosure, as shown in FIG. 2, the method includes:
201, a terminal equipment receives configuration information from a network device; the configuration information being used to configure beam management and/or beam reporting; and
202, the terminal equipment initiates beam reporting to the network device.

It is worth noting that the above FIG. 2 only schematically describes embodiments of the present disclosure, however the present disclosure is not limited thereto. For example, an execution sequence of operations may be adjusted appropriately, moreover some other operations may be added or certain operations therein may be removed. Those skilled in the art may make appropriate modifications according to the above contents, not being limited to records in the above FIG. 2.

In some embodiments, in a case where a condition is met and/or an event is triggered, a terminal equipment reports information of one or more beams to the network device via an MAC CE and/or a scheduling request (SR).

For example, for UE-initiated beam management, a UE may autonomously report information of one or more beams to a gNB under certain conditions or if certain events are triggered. For example, a report may be transmitted via an existing MAC CE or via a newly defined MAC CE. Moreover, in addition to an MAC CE, a UE may be configured with dedicated SR resources, or may further use existing SR resources, the present disclosure is not limited thereto, other resources may also be used.

In some embodiments, the MAC CE includes at least one of the following: a CSI-RS resource indicator (CRI), an SSB resource indicator (SSBRI), an L1-RSRP, an L1-SINR, a physical layer identifier, a component carrier identifier, a cell identifier, or a bandwidth part (BWP) identifier. The present disclosure is not limited thereto, for example the MAC CE may include one of the above pieces of information, or may further include any combination of two or more, or may further include other information.

For example, if a plurality of CRIs/SSBRIs are reported, an MAC CE may include an L1-RSRP/L1-SINR of each CRI/SSBRI. For another example, if a plurality of CRIs/SSBRIs are reported, an MAC CE may include a difference of L1-RSRP/L1-SINR of CRIs/SSBRIs; for example, an MAC CE may include one reference L1-RSRP/L1-SINR, and a plurality of differences based on the reference L1-RSRP/L1-SINR.

FIG. 3 is another schematic diagram of a beam management method in embodiments of the present disclosure. As shown in FIG. 3, the method includes:
301, a terminal equipment receives configuration information from a network device;

For example, configuration information is used to configure beam management and/or beam reporting, and for example may include a reference signal configuration for beam management, and may further include a resource configuration for beam reporting.
302, a terminal equipment performs beam management;

For example, a terminal equipment may receive a CSI-RS transmitted by a network device according to configuration information to perform beam measurement. For example, beam sweeping may be performed to select one or more candidate beams. AI/ML-based beam management may be used, or non-AI/ML beam management may further be used. For specific details, related technologies may be referred to.
303, a terminal equipment initiates beam reporting to a network device.

For example, a terminal equipment autonomously initiates beam reporting when a certain event is triggered or a certain condition is met. The beam reporting may only include information of a current beam (e.g., whether quality deteriorates), or may further include information of one or more candidate beams.

It is worth noting that the above FIG. 3 only schematically describes embodiments of the present disclosure, however the present disclosure is not limited thereto. For example, an execution sequence of operations may be adjusted appropriately, moreover some other operations may be added or certain operations therein may be removed. Those skilled in the art may make appropriate modifications according to the above contents, not being limited to records in the above FIG. 3.

The following provides a schematic description of that a terminal equipment initiates beam reporting (e.g., event-triggered).

In some embodiments, if quality of a first beam which is different from a current beam exceeds a first threshold (ΔTH1) and persists for a first period (ΔT1), the beam reporting is triggered, wherein the first period and/or the first threshold is/are predefined or configured.

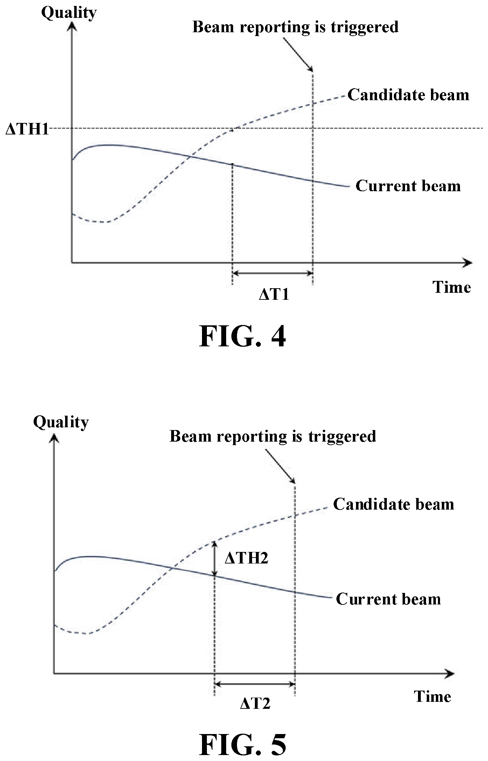

FIG. 4 is another example diagram of event-triggered beam reporting in embodiments of the present disclosure. As shown in FIG. 4, if a UE finds that quality of another beam (candidate beam shown in FIG. 4) exceeds a threshold ΔTH1 and persists for ΔT1, beam reporting is triggered. The threshold (ΔTH1) and/or the period (ΔT1) may be predefined or configurable. Or, a timer (T1) may be predefined or periodically configured, and if the timer expires, beam reporting is triggered. Quality of a beam may be evaluated based on an L1-RSRP/L1-SINR or a hypothetical BLRE.

In some embodiments, if quality of a first beam which is different from a current beam exceeds a second threshold (ΔTH2) over quality of the current beam and persists for a second period (ΔT2), the beam reporting is triggered, wherein the second period and/or the second threshold is/are predefined or configured.

FIG. 5 is another example diagram of event-triggered beam reporting in embodiments of the present disclosure. As shown in FIG. 5, if a UE finds that quality of another beam (a candidate beam shown in FIG. 5) exceeds quality of a current beam (the exceeded amount is greater than a threshold ΔTH2) and persists for ΔT2, beam reporting is triggered. The threshold (ΔTH2) and/or the period (ΔT2) may be predefined or configurable. Or, a timer (T2) may be predefined or periodically configured, and if the timer expires, beam reporting is triggered. Quality of a beam may be evaluated based on an L1-RSRP/L1-SINR or a hypothetical BLRE.

In some embodiments, for example, in an MAC-CE for beam reporting, if only one CRI/SSBRI is reported, the reported CRI/SSBRI is UE-preferred, e.g., a CRI/SSBRI with a highest L1-RSRP/L1-SINR, and reporting of the L1-RSRP/L1-SINR may be omitted (which is optional). If a plurality of CRIs/SSBRIs are reported, a first CRI/SSBRI may be UE-preferred, e.g., a CRI/SSBRI with a highest L1-RSRP/L1-SINR.

For another example, a gNB may configure periodic/semi-persistent reference signals (CSI-RS, or SSB) for a UE to perform monitoring/measurement (or all SSBs may be used for measurement). In one example, L1-RSRP/L1-SINR reporting is not configured for periodic/semi-persistent reference signals. In another example, a reference signal for new candidate beam identification in beam failure detection and beam failure recovery may be used by a UE to monitor beam quality.

For another example, averaged or filtered L1 measurement (L1-RSRP/L1-SINR/hypothetical BLER) may be used to trigger an event. For example, if an average L1-RSRP of a candidate beam over a specific period exceeds a specific threshold of a current beam, the event may be triggered.

For another example, considering a carrier aggregation operation, if, on at least one CC, a UE finds that quality of another beam exceeds a specific threshold (ΔTH1) and persists for a specific period (ΔT1), beam reporting is triggered. Or, considering a carrier aggregation operation, if, on at least one CC, a UE finds that quality of another beam exceeds a specific threshold (ΔTH2) over quality of a current beam and persists for a specific period (ΔT2), beam reporting is triggered.

In some embodiments, if quality of a current beam is lower than a third threshold (ΔTH3) and persists for a third period (ΔT3), the beam reporting is triggered, wherein the third period and/or the third threshold is/are predefined or configured.

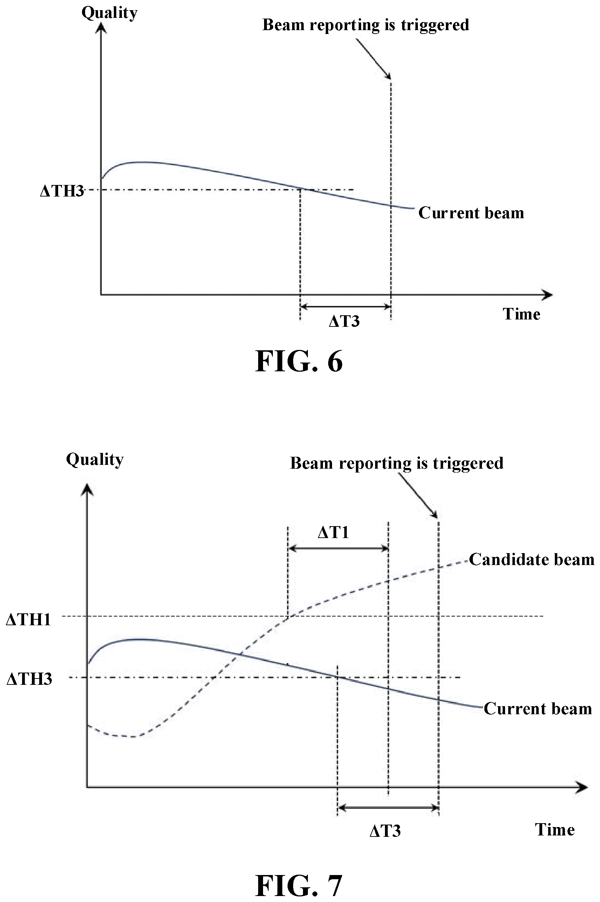

FIG. 6 is another example diagram of event-triggered beam reporting in embodiments of the present disclosure. As shown in FIG. 6, if a UE finds that quality of a current beam is lower than a threshold ΔTH3 and persists for ΔT3, beam reporting is triggered. The threshold (ΔTH3) and/or the period (ΔT3) may be predefined or configurable. Or, a timer (T3) may be predefined or periodically configured, and if the timer expires, beam reporting is triggered. Quality of a beam may be evaluated based on an L1-RSRP/L1-SINR or a hypothetical BLRE.

In some embodiments, for example, in an MAC CE for beam reporting, an L1-RSRP/L1-SINR of a current beam (or a current TCI state) is reported. L1-RSRP/L1-SINR of the current beam (or current TCI state) may be included in the MAC CE, or L1-RSRP/L1-SINR of the current beam (or current TCI state) may also not be included in the MAC CE. A UE may keep measuring a current beam (current TCI state). For example, a UE may keep monitoring a PDCCH/CORESET.

For another example, averaged or filtered L1 measurement (L1-RSRP/L1-SINR/hypothetical BLER) may be used to trigger an event. For example, if an average L1-RSRP of a current beam over a specific period is lower than a specific threshold, the event may be triggered.

For another example, considering a carrier aggregation operation, if, on at least one CC, a UE finds that quality of a current beam (or current TCI state) is lower than a specific threshold (ΔTH3) and persists for a specific period (ΔT3), beam reporting is triggered.

In some embodiments, if quality of a first beam which is different from a current beam exceeds a first threshold (ΔTH1) and persists for a first period (ΔT1), and quality of the current beam is lower than a third threshold (ΔTH3) and persists for a third period (ΔT3), the beam reporting is triggered, wherein the first period and/or the first threshold and/or the third period and/or the third threshold is/are predefined or configured.

FIG. 7 is another example diagram of event-triggered beam reporting in embodiments of the present disclosure. As shown in FIG. 7, if a UE finds that quality of a current beam is lower than a threshold ΔTH3 and persists for ΔT3, and quality of another beam (candidate beam shown in FIG. 7) exceeds a threshold ΔTH1 and persists for ΔT1, beam reporting is triggered. The threshold (ΔTH1) and/or the period (ΔT1) and/or the threshold (ΔTH3) and/or the period (ΔT3) may be predefined or configurable. Or, a timer (T4) may be predefined or periodically configured, and if the timer expires, beam reporting is triggered. Quality of a beam may be evaluated based on an L1-RSRP/L1-SINR or a hypothetical BLRE.

In addition, in an MAC CE, a UE may further report one or more UE-preferred beams, i.e., candidate beam(s), to a gNB. For example, if quality of one or more beams exceeds a certain threshold (ΔTH4) for a certain period (ΔT4), the beam(s) may be reported as candidate beam(s), wherein the threshold (ΔTH4) and the period (ΔT4) may be predefined or configurable. Or, a timer (T4) may be predefined or periodically configured. ΔTH4, ΔT4, T4 may be the same as ΔTH1, ΔT1, T1 respectively.

In some embodiments, if quality of a first beam which is different from a current beam exceeds a second threshold (ΔTH2) over quality of the current beam and persists for a second period (ΔT2), and quality of the current beam is lower than a third threshold (ΔTH3) and persists for a third period (ΔT3), the beam reporting is triggered, wherein the second period and/or the second threshold and/or the third period and/or the third threshold is/are predefined or configured.

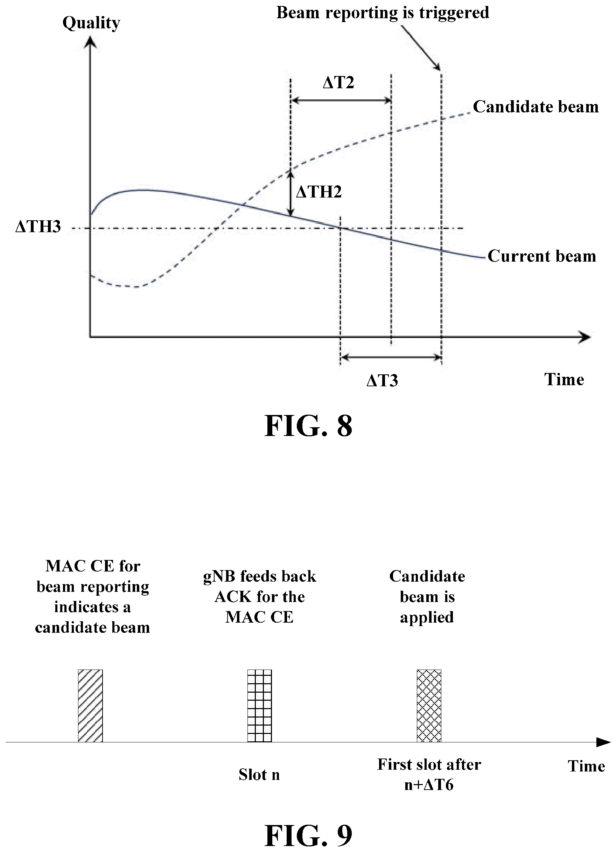

FIG. 8 is another example diagram of event-triggered beam reporting in embodiments of the present disclosure. As shown in FIG. 8, if a UE finds that quality of a current beam is lower than a threshold ΔTH3 and persists for ΔT3, and quality of another beam (a candidate beam shown in FIG. 8) exceeds quality of a current beam (the exceeded amount is greater than a threshold ΔTH2) and persists for ΔT2, beam reporting is triggered. The threshold (ΔTH2) and/or the period (ΔT2) and/or the threshold (ΔTH3) and/or the period (ΔT3) may be predefined or configurable. Or, a timer (T5) may be predefined or periodically configured, and if the timer expires, beam reporting is triggered. Quality of a beam may be evaluated based on an L1-RSRP/L1-SINR or a hypothetical BLRE.

In addition, in an MAC CE, a UE may further report one or more UE-preferred beams, i.e., candidate beam(s), to a gNB. For example, if quality of one or more beams exceeds a certain threshold (ΔTH5) over quality of a current beam for a certain period (ΔT5), the beam(s) may be reported as candidate beam(s), wherein the threshold (ΔTH5) and the period (ΔT5) may be predefined or configurable. Or, a timer (T5) may be predefined or periodically configured. ΔTH5, ΔT5, T5 may be the same as ΔTH2, ΔT2, T2 respectively.

In some embodiments, for example, in an MAC-CE for beam reporting, if only one CRI/SSBRI is reported, the reported CRI/SSBRI is UE-preferred, e.g., a CRI/SSBRI with a highest L1-RSRP/L1-SINR, and reporting of the L1-RSRP/L1-SINR may be omitted (which is optional). If a plurality of CRIs/SSBRIs are reported, a first CRI/SSBRI may be UE-preferred, e.g., a CRI/SSBRI with a highest L1-RSRP/L1-SINR.

For another example, in an MAC CE, quality of a current beam (current TCI state) may be included, or quality of a current beam (current TCI state) may not be included. Triggering of an MAC CE may implicitly carry information that quality of a current beam is poor.

For another example, a UE may keep measuring a current beam (current TCI state). For example, a UE may keep monitoring a PDCCH/CORESET. A gNB may configure periodic/semi-persistent reference signals (CSI-RS, or SSB) for a UE to perform monitoring/measurement (or all SSBs may be used for measurement). In one example, L1-RSRP/L1-SINR reporting is not configured for periodic/semi-persistent reference signals. In another example, a reference signal for new candidate beam identification in beam failure detection and beam failure recovery may be used by a UE to monitor beam quality.

For another example, averaged or filtered L1 measurement (L1-RSRP/L1-SINR/hypothetical BLER) may be used to trigger an event. For example, if an average L1-RSRP of a current beam over a specific period is lower than a specific threshold, the event may be triggered.

For another example, considering a carrier aggregation operation, if, on at least one CC, a UE finds that quality of a current beam (or current TCI state) is lower than a specific threshold (ΔTH3) and persists for a specific period (ΔT3), and quality of a candidate beam exceeds quality of a current beam (the exceeded amount is greater than a threshold ΔTH2) and persists for ΔT2, beam reporting is triggered.

The above text schematically describes triggering of beam reporting. The following text further describes the present disclosure.

In some embodiments, for beam reporting initiated by a terminal equipment, one or more parameters for beam reporting are configured per component carriers (CC); the one or more parameters for beam reporting include at least one of the following: a threshold, a period, or a timer, the present application is not limited thereto.

In some embodiments, for beam reporting initiated by a terminal equipment, one or more parameters for beam reporting are configured for all CCs; the one or more parameters for beam reporting include at least one of the following: a threshold, a period, or a timer, the present application is not limited thereto.

In some embodiments, for beam reporting initiated by a terminal equipment, one or more candidate beams are reported per component carriers (CC), or one or more candidate beams are reported for all CCs, or one or more candidate beams are reported for some CCs, or one or more candidate beams are reported for a subset of all CCs.

In some embodiments, if a serving beam (or a current TCI state) is changed, a timer for beam reporting initiated by a terminal equipment is restarted.

In some embodiments, a plurality of events are predefined; one MAC CE corresponds to one event, or one or more events are indicated in one MAC CE.

For example, a plurality of events (different types of events) may be defined, such as event type 1, event type 2, and so on. A plurality of MAC CEs may be introduced, for example, each event corresponds to one MAC CE. Or, the same one MAC CE may be used, and an event type may be indicated in the MAC CE.

For another example, a plurality of MAC CEs may be defined. For example, one MAC CE is used for one CC, and another MAC CE is used for a plurality of CCs.

In some embodiments, for beam reporting initiated by a terminal equipment, if a reported MAC CE includes information about quality deterioration of a current beam (or a current TCI state), TCI switching is triggered by the network device via DCI, or beam measurement and/or TCI state update is/are triggered by the network device via RRC and/or an MAC CE.

For example, for a UE-initiated beam management procedure, if a reported MAC CE only includes information indicating that a current serving beam (current TCI state) deteriorates, a gNB may trigger TCI switching (e.g., via DCI) after receiving the MAC CE. Or, a gNB may trigger beam measurement, and then perform TCI switching or TCI state update.

In some embodiments, for beam reporting initiated by a terminal equipment, if a reported MAC CE includes candidate beam information and a candidate beam is not in an activated TCI state, TCI state update is triggered by the network device, or beam measurement is triggered by the network device.

For example, for a UE-initiated beam management procedure, if a reported MAC CE includes candidate beam information and a candidate beam is not in an activated TCI state, a gNB may trigger TCI state update after receiving the MAC CE. Or, a gNB may trigger beam measurement, and then perform TCI switching or TCI state update.

In some embodiments, for beam reporting initiated by a terminal equipment, if a reported MAC CE includes candidate beam information and a candidate beam is in an activated TCI state, TCI state update is triggered by the network device, or beam measurement and/or TCI state update is/are triggered by the network device via RRC and/or an MAC CE.

For example, for a UE-initiated beam management procedure, if a reported MAC CE includes candidate beam information and a candidate beam is in an activated TCI state, a gNB may trigger TCI state update after receiving the MAC CE. Or, a gNB may trigger beam measurement, and then perform TCI switching or TCI state update.

In some embodiments, for beam reporting initiated by a terminal equipment, if a reported MAC CE includes candidate beam information and a candidate beam is in an activated TCI state, TCI switching is triggered by the network device via DCI, or beam measurement and/or TCI state update is/are triggered by the network device via RRC and/or an MAC CE.

For example, for a UE-initiated beam management procedure, if a reported MAC CE includes candidate beam information and a candidate beam is in an activated TCI state, a gNB may trigger TCI switching (e.g., via DCI) after receiving the MAC CE. Or, a gNB may trigger beam measurement, and then perform TCI switching or TCI state update.

In some embodiments, for beam reporting initiated by a terminal equipment, if a reported MAC CE includes candidate beam information and a candidate beam is in an activated TCI state, TCI switching is triggered by the terminal equipment via the MAC CE, and the reported MAC CE is used for beam switching or TCI state switching.

For example, for a UE-initiated beam management procedure, if a reported MAC CE includes candidate beam information and a candidate beam is in an activated TCI state, an MAC CE reported by a UE may be used for beam switching or TCI state switching. A candidate beam indicated in an MAC CE will be used for communications.

For another example, a gNB may acknowledge receipt of an MAC CE for beam reporting. A UE receives acknowledgment for indicating receipt of the MAC CE from a gNB, and the candidate beam indicated in the MAC CE is used by the terminal equipment and the network device.

In one example, the acknowledgment may be a normal uplink grant that schedules a new transmission with the same HARQ process ID as a PUSCH carrying the MAC CE.

FIG. 9 is an example diagram of application time of a candidate beam indicated by an MAC CE in embodiments of the present application. As shown in FIG. 9, when a gNB receives an MAC CE for beam reporting and the gNB transmits an acknowledgment in slot n corresponding to a PUSCH carrying the MAC CE, a candidate beam indicated in an MAC CE is applied to communications as of starting from a first slot after slot n+ΔT6, where ΔT6 may be predefined or configurable, or may depend on a UE capability.

In some embodiments, for beam reporting initiated by a terminal equipment, if a reported MAC CE includes candidate beam information, the candidate beam indicated in the MAC CE is indicated by the network device as being in an activated TCI state via DCI.

For example, for a UE-initiated beam management procedure, if a reported MAC CE includes candidate beam information (regardless of whether a candidate beam is in a currently activated TCI state), a candidate beam included in the MAC CE may be regarded as being in a newly activated TCI state. A gNB may use DCI to indicate the newly activated TCI state. That is, a gNB does not need to further transmit signaling to update a TCI state list and activate a TCI state via an existing MAC CE.

For another example, a gNB acknowledges receipt of an MAC CE for beam reporting. In one example, the acknowledgment may be a normal uplink grant that schedules a new transmission with the same HARQ process ID as a PUSCH carrying the MAC CE.

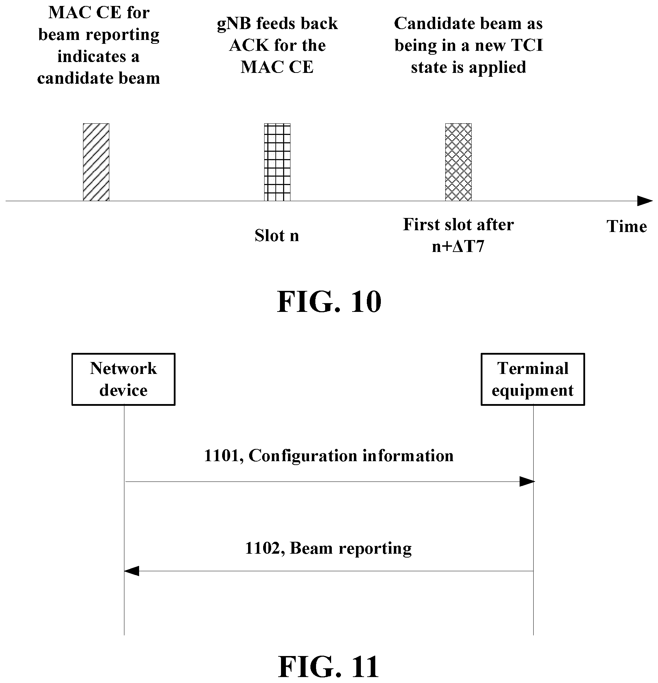

FIG. 10 is an example diagram of application time of a candidate beam indicated by an MAC CE in embodiments of the present application. As shown in FIG. 10, when a gNB receives an MAC CE for beam reporting and the gNB transmits an acknowledgment in slot n corresponding to a PUSCH carrying the MAC CE, a candidate beam indicated in an MAC CE as being in an activated TCI state is applied to communications as of starting from a first slot after slot n+ΔT7, where ΔT7 may be predefined or configurable, or may depend on a UE capability.

In some embodiments, for a UE-initiated beam management procedure, a maximum number of candidate beams included in an MAC CE may be the same as the number that is able to be indicated in an existing MAC CE for an activating TCI state; for example, the maximum number of candidate beams is eight. Or, a maximum number of candidate beams included in an MAC-CE may be different from that in an existing MAC CE.

Each of the above embodiments only exemplarily describes the present disclosure, however the present disclosure is not limited thereto, appropriate modifications may be further made based on each of the above embodiments. For example, each of the above embodiments may be used individually, or one or more of the above embodiments may be combined.

As may be seen from the above embodiments, considering that a terminal equipment side has more timely information about beam quality, a terminal equipment may initiate beam reporting or a beam management procedure, thereby not only accuracy and reliability of beam management may be ensured or improved, but also signaling overhead may be reduced.

### Embodiments of a Second Aspect

Embodiments of the present disclosure provide a beam management method, which is described from a network device side. Embodiments of the second aspect may be combined with embodiments of the first aspect, the same contents as embodiments of the first aspect are not further elaborated.

FIG. 11 is another schematic diagram of a beam management method in embodiments of the present disclosure, as shown in FIG. 11, the method includes:
1101, a network device transmits configuration information to a terminal equipment; the configuration information being used to configure beam management and/or beam reporting; and
1102, a network device receives beam reporting initiated by the terminal equipment.

Each of the above embodiments only exemplarily describes the present disclosure, however the present disclosure is not limited thereto, appropriate modifications may be further made based on each of the above embodiments. For example, each of the above embodiments may be used individually, or one or more of the above embodiments may be combined.

As may be seen from the above embodiments, considering that a terminal equipment side has more timely information about beam quality, a terminal equipment may initiate beam reporting or a beam management procedure, thereby not only accuracy and reliability of beam management may be ensured or improved, but also signaling overhead may be reduced.

### Embodiments of a Third Aspect

Embodiments of the present disclosure provide a beam management apparatus. The apparatus may be e.g. a terminal equipment, or may be one or more components or assemblies configured in a terminal equipment. Contents same as embodiments of the first and second aspects are not further elaborated.

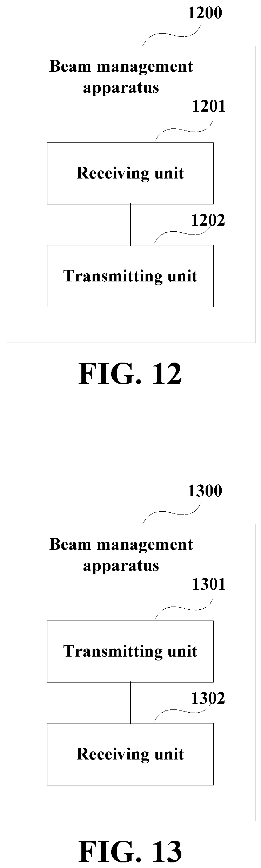

FIG. 12 is another schematic diagram of a beam management apparatus in embodiments of the present disclosure, as shown in FIG. 12, a beam management apparatus 1200 in embodiments of the present disclosure includes:
a receiving unit 1201 configured to receive configuration information from a network device; the configuration information being used to configure beam management and/or beam reporting; and
a transmitting unit 1202 configured to initiate beam reporting to the network device.

In some embodiments, in a case where a condition is met and/or an event is triggered, the transmitting unit 1202 reports information of one or more beams to the network device via an MAC CE and/or a scheduling request (SR).

In some embodiments, the MAC CE includes at least one of the following: a CRI, an SSBRI, an L1-RSRP, an L1-SINR, a physical layer identifier, a component carrier identifier, a cell identifier, or a bandwidth part (BWP) identifier.

In some embodiments, if quality of a first beam which is different from a current beam exceeds a first threshold (ΔTH1) and persists for a first period (ΔT1), the beam reporting is triggered, wherein the first period and/or the first threshold is/are predefined or configured.

In some embodiments, if quality of a first beam which is different from a current beam exceeds a second threshold (ΔTH2) over quality of the current beam and persists for a second period (ΔT2), the beam reporting is triggered, wherein the second period and/or the second threshold is/are predefined or configured.

In some embodiments, if quality of a current beam is lower than a third threshold (ΔTH3) and persists for a third period (ΔT3), the beam reporting is triggered, wherein the third period and/or the third threshold is/are predefined or configured.

In some embodiments, if quality of a first beam which is different from a current beam exceeds a first threshold (ΔTH1) and persists for a first period (ΔT1), and quality of the current beam is lower than a third threshold (ΔTH3) and persists for a third period (ΔT3), the beam reporting is triggered, wherein the first period and/or the first threshold and/or the third period and/or the third threshold is/are predefined or configured.

In some embodiments, if quality of a first beam which is different from a current beam exceeds a second threshold (ΔTH2) over quality of the current beam and persists for a second period (ΔT2), and quality of the current beam is lower than a third threshold (ΔTH3) and persists for a third period (ΔT3), the beam reporting is triggered, wherein the second period and/or the second threshold and/or the third period and/or the third threshold is/are predefined or configured.

In some embodiments, for beam reporting initiated by a terminal equipment, one or more parameters for beam reporting are configured per component carriers (CC), or one or more parameters for beam reporting are configured for all CCs; wherein the one or more parameters for beam reporting include at least one of the following: a threshold, a period, or a timer.

In some embodiments, for beam reporting initiated by a terminal equipment, one or more candidate beams are reported per component carriers (CC), or one or more candidate beams are reported for all CCs, or one or more candidate beams are reported for some CCs, or one or more candidate beams are reported for a subset of all CCs.

In some embodiments, if a serving beam (or a current TCI state) is changed, a timer for beam reporting initiated by a terminal equipment is restarted.

In some embodiments, a plurality of events are predefined; one MAC CE corresponds to one event, or one or more events are indicated in one MAC CE.

In some embodiments, for beam reporting initiated by a terminal equipment, if a reported MAC CE includes information about quality deterioration of a current beam (or a current TCI state), TCI switching is triggered by the network device via DCI, or beam measurement and/or TCI state update is/are triggered by the network device via RRC and/or an MAC CE.

In some embodiments, for beam reporting initiated by a terminal equipment, if a reported MAC CE includes candidate beam information and a candidate beam is not in an activated TCI state, TCI state update is triggered by the network device, or beam measurement is triggered by the network device.

In some embodiments, for beam reporting initiated by a terminal equipment, if a reported MAC CE includes candidate beam information and a candidate beam is in an activated TCI state, TCI state update is triggered by the network device, or beam measurement and/or TCI state update is/are triggered by the network device via RRC and/or an MAC CE.

In some embodiments, for beam reporting initiated by a terminal equipment, if a reported MAC CE includes candidate beam information and a candidate beam is in an activated TCI state, TCI switching is triggered by the network device via DCI, or beam measurement and/or TCI state update is/are triggered by the network device via RRC and/or an MAC CE.

In some embodiments, for beam reporting initiated by a terminal equipment, if a reported MAC CE includes candidate beam information and a candidate beam is in an activated TCI state, TCI switching is triggered by the terminal equipment via the MAC CE, and the reported MAC CE is used for beam switching or TCI state switching.

In some embodiments, the receiving unit 1201 further receives acknowledgment for indicating receipt of the MAC CE from the network device, and the candidate beam indicated in the MAC CE is used by the terminal equipment and the network device.

In some embodiments, for beam reporting initiated by a terminal equipment, if a reported MAC CE includes candidate beam information, the candidate beam indicated in the MAC CE is indicated by the network device as being in an activated TCI state via DCI.

Each of the above embodiments only exemplarily describes the present disclosure, however the present disclosure is not limited thereto, appropriate modifications may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The beam management apparatus 1200 may further include other components or modules. For detailed contents of these components or modules, relevant technologies may be referred to.

Moreover, for simplicity, FIG. 12 only exemplarily shows a connection relationship or signal flow between components or modules, however those skilled in the art should know that various relevant technologies such as bus connection may be used. Each of the above components or modules may be implemented via a hardware facility such as a processor, a memory, a transmitter, a receiver, etc. Embodiments of the present disclosure do not impose limitations thereto.

As may be seen from the above embodiments, considering that a terminal equipment side has more timely information about beam quality, a terminal equipment may initiate beam reporting or a beam management procedure, thereby not only accuracy and reliability of beam management may be ensured or improved, but also signaling overhead may be reduced.

### Embodiments of a Fourth Aspect

Embodiments of the present disclosure provide a beam management apparatus. The apparatus may be a network device, or may be one or more components or assemblies configured in a network device. Contents same as embodiments of the first to third aspects are not further elaborated.

FIG. 13 is another schematic diagram of a beam management apparatus in embodiments of the present disclosure, as shown in FIG. 13, a beam management apparatus 1300 includes:
a transmitting unit 1301 configured to transmit configuration information to a terminal equipment; the configuration information being used to configure beam management and/or beam reporting; and
a receiving unit 1302 configured to receive beam reporting initiated by the terminal equipment.

Each of the above embodiments only exemplarily describes the present disclosure, however the present disclosure is not limited thereto, appropriate modifications may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The beam management apparatus 1300 may further include other components or modules. For detailed contents of these components or modules, relevant technologies may be referred to.

Moreover, for simplicity, FIG. 13 only exemplarily shows a connection relationship or signal flow between components or modules, however those skilled in the art should know that various relevant technologies such as bus connection may be used. Each of the above components or modules may be implemented via a hardware facility such as a processor, a memory, a transmitter, a receiver, etc. Embodiments of the present disclosure do not impose limitations thereto.

As may be seen from the above embodiments, considering that a terminal equipment side has more timely information about beam quality, a terminal equipment may initiate beam reporting or a beam management procedure, thereby not only accuracy and reliability of beam management may be ensured or improved, but also signaling overhead may be reduced.

### Embodiments of a Fifth Aspect

Embodiments of the present disclosure further provide a communication system, FIG.1 may be referred to, contents same as embodiments of the first to fourth aspects are not further elaborated.

In some embodiments, a communication system 100 at least may include:
a network device configured to transmit configuration information to a terminal equipment; the configuration information being used to configure beam management and/or beam reporting; and
a terminal equipment configured to initiate beam reporting to the network device.

Embodiments of the present disclosure further provide a terminal equipment, but the present disclosure is not limited thereto, it may further be other device.

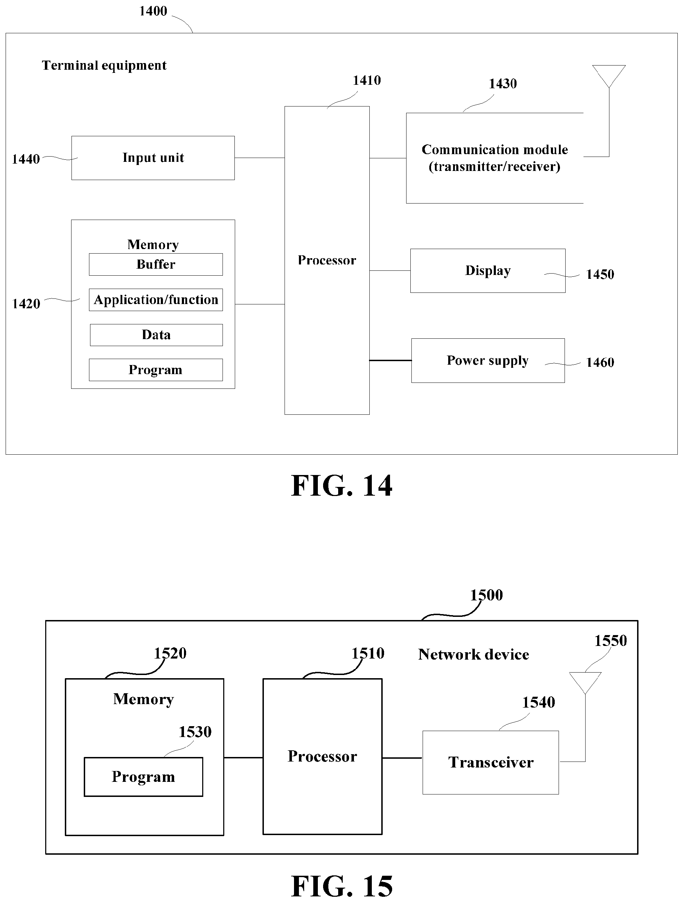

FIG. 14 is a schematic diagram of a terminal equipment in embodiments of the present disclosure. As shown in FIG. 14, the terminal equipment 1400 may include a processor 1410 and a memory 1420; the memory 1420 stores data and programs, and is coupled to the processor 1410. It is worth noting that this figure is exemplary, other types of structures may also be used to supplement or replace this structure, to implement a telecommunication function or other functions.

For example, the processor 1410 may be configured to execute a program to implement a beam management method described in embodiments of the first aspect. For example, the processor 1410 may be configured to perform the following control: receiving configuration information from a network device, the configuration information being used to configure beam management and/or beam reporting; and initiating beam reporting to the network device.

As shown in FIG. 14, the terminal equipment 1400 may further include: a communication module 1430, an input unit 1440, a display 1450, and a power supply 1460. Functions of the above components are similar to related arts, and are not further elaborated here. It is worth noting that the terminal equipment 1400 does not have to include all components shown in FIG. 14, said components are not indispensable. Moreover, the terminal equipment 1400 may further include components not shown in FIG. 14, related arts may be referred to.

Embodiments of the present disclosure further provide a network device, for example it may be a base station, but the present disclosure is not limited thereto, or it may further be other network device.

FIG. 15 is a composition schematic diagram of a network device in embodiments of the present disclosure. As shown in FIG. 15, a network device 1500 may include: a processor 1510 (such as a central processing unit (CPU)) and a memory 1520; the memory 1520 is coupled to the processor 1510. The memory 1520 may store various data; moreover, further stores a program 1530 for information processing, and executes the program 1530 under the control of the processor 1510.

For example, the processor 1510 may be configured to execute a program to implement a beam management method described in embodiments of the second aspect. For example, the processor 1510 may be configured to perform the following control: transmitting configuration information to a terminal equipment; the configuration information being used to configure beam management and/or beam reporting; and receiving beam reporting initiated by the terminal equipment.

In addition, as shown in FIG. 15, the network device 1500 may further include a transceiver 1540 and an antenna 1550, etc., wherein functions of said components are similar to related arts and are not further elaborated here. It is worth noting that the network device 1500 does not have to include all components shown in FIG. 15. Moreover, the network device 1500 may further include components not shown in FIG. 15, related arts may be referred to.

Embodiments of the present disclosure further provide a computer program, wherein when a terminal equipment executes the program, the program enables the terminal equipment to execute a beam management method described in embodiments of the first aspect.

Embodiments of the present disclosure further provide a storage medium in which a computer program is stored, wherein the computer program enables a terminal equipment to execute a beam management method described in embodiments of the first aspect.

Embodiments of the present disclosure further provide a computer program, wherein when a network device executes the program, the program enables the network device to execute a beam management method described in embodiments of the second aspect.

Embodiments of the present disclosure further provide a storage medium in which a computer program is stored, wherein the computer program enables a network device to execute a beam management method described in embodiments of the second aspect.

Apparatuses and methods in the present disclosure may be implemented by hardware, or may be implemented by combining hardware with software. The present disclosure relates to such a computer readable program that when the program is executed by a logic component, the logic component is able to implement apparatuses described in the above text or a constituent component, or the logic component is able to implement various methods or steps described in the above text. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Persons skilled in the art may make various variations and amendments to the present disclosure according to principles of the present disclosure, these variations and amendments are also within scopes of the present disclosure.

As for implementations including the above embodiments, the following supplements are further disclosed:
1. A beam management method, including that:
   a terminal equipment receives configuration information from a network device; the configuration information being used to configure beam management and/or beam reporting; and
   the terminal equipment initiates beam reporting to the network device.
2. A beam management method, including that:
   a network device transmits configuration information to a terminal equipment; the configuration information being used to configure beam management and/or beam reporting; and
   the network device receives beam reporting initiated by the terminal equipment.
3. A terminal equipment, including a memory and a processor, the memory storing a computer program, and the processor being configured to execute the computer program to implement the beam management method according to supplement 1.
4. A network device, including a memory and a processor, the memory storing a computer program, and the processor being configured to execute the computer program to implement the beam management method according to supplement 2.

## Claims

1. A beam management apparatus, comprising:
a receiving unit configured to receive configuration information from a network device, the configuration information being used to configure beam management and/or beam reporting; and
a transmitting unit configured to initiate beam reporting to the network device.

2. The apparatus according to claim 1, wherein in a case where a condition is met and/or an event is triggered, the transmitting unit is configured to report information of one or more beams to the network device via a MAC CE and/or a scheduling request.

3. The apparatus according to claim 2, wherein the MAC CE comprises at least one of the following: a CRI, an SSBRI, an L1-RSRP, an L1-SINR, a physical layer identifier, a component carrier identifier, a cell identifier, or a bandwidth part (BWP) identifier.

4. The apparatus according to claim 2, wherein if quality of a first beam which is different from a current beam exceeds a first threshold and persists for a first period, the beam reporting is triggered, wherein the first period and/or the first threshold is/are predefined or configured.

5. The apparatus according to claim 2, wherein if quality of a first beam which is different from a current beam exceeds a second threshold over quality of the current beam and persists for a second period, the beam reporting is triggered, wherein the second period and/or the second threshold is/are predefined or configured.

6. The apparatus according to claim 2, wherein if quality of a current beam is lower than a third threshold and persists for a third period, the beam reporting is triggered, wherein the third period and/or the third threshold is/are predefined or configured.

7. The apparatus according to claim 2, wherein if quality of a first beam which is different from a current beam exceeds a first threshold and persists for a first period, and quality of the current beam is lower than a third threshold and persists for a third period, the beam reporting is triggered, wherein the first period and/or the first threshold and/or the third period and/or the third threshold is/are predefined or configured.

8. The apparatus according to claim 2, wherein if quality of a first beam which is different from a current beam exceeds a second threshold over quality of the current beam and persists for a second period, and quality of the current beam is lower than a third threshold and persists for a third period, the beam reporting is triggered, wherein the second period and/or the second threshold and/or the third period and/or the third threshold is/are predefined or configured.

9. The apparatus according to claim 1, wherein for beam reporting initiated by a terminal equipment, one or more parameters for beam reporting are configured per component carrier, or one or more parameters for beam reporting are configured for all component carriers;
wherein the one or more parameters for beam reporting comprise at least one of the following: a threshold, a period, or a timer.

10. The apparatus according to claim 1, wherein for beam reporting initiated by a terminal equipment, one or more candidate beams are reported per component carrier, or one or more candidate beams are reported for all component carriers, or one or more candidate beams are reported for a part of component carriers, or one or more candidate beams are reported for a subset of all component carriers.

11. The apparatus according to claim 1, wherein if a serving beam or a current TCI state is changed, a timer for beam reporting initiated by a terminal equipment is restarted.

12. The apparatus according to claim 2, wherein a plurality of events are predefined;
one MAC CE corresponds to one event, or one or more events are indicated in one MAC CE.

13. The apparatus according to claim 2, wherein for beam reporting initiated by a terminal equipment, if a reported MAC CE comprises information about quality deterioration of a current beam or a current TCI state, TCI switching is triggered by the network device via DCI, or beam measurement and/or TCI state update is/are triggered by the network device via RRC and/or a MAC CE.

14. The apparatus according to claim 2, wherein for beam reporting initiated by a terminal equipment, if a reported MAC CE comprises candidate beam information and a candidate beam is not in an activated TCI state, TCI state update is triggered by the network device, or beam measurement is triggered by the network device.

15. The apparatus according to claim 2, wherein for beam reporting initiated by a terminal equipment, if a reported MAC CE comprises candidate beam information and a candidate beam is in an activated TCI state, TCI switching is triggered by the network device via DCI, or beam measurement and/or TCI state update is/are triggered by the network device via RRC and/or an MAC CE.

16. The apparatus according to claim 2, wherein for beam reporting initiated by a terminal equipment, if a reported MAC CE comprises candidate beam information and a candidate beam is in an activated TCI state, TCI switching is triggered by the terminal equipment via the MAC CE, and the reported MAC CE is used for beam switching or TCI state switching.

17. The apparatus according to claim 16, wherein the receiving unit is further configured to receive an acknowledgment for indicating receipt of the MAC CE from the network device, and the candidate beam indicated in the MAC CE is used by the terminal equipment and the network device.

18. The apparatus according to claim 2, wherein for beam reporting initiated by a terminal equipment, if a reported MAC CE comprises candidate beam information, the candidate beam indicated in the MAC CE is indicated by the network device as being in an activated TCI state via DCI.

19. A beam management apparatus, comprising:
a transmitting unit configured to transmit configuration information to a terminal equipment, the configuration information being used to configure beam management and/or beam reporting; and
a receiving unit configured to receive beam reporting initiated by the terminal equipment.

20. A communication system, comprising:
a network device configured to transmit configuration information to a terminal equipment, the configuration information being used to configure beam management and/or beam reporting; and
a terminal equipment configured to initiate beam reporting to the network device.
